# EUROPEAN PATENT APPLICATION

(11) **EP 2 042 970 A1**
(43) Date of publication of application: **01.04.2009**
(21) Application number: 07023577.5
(22) Date of filing: 05.12.2007
(51) Int. Cl.: G06F 3/03, G06F 3/033

(54) **Cursor positioning method by a handheld camera**

(30) Priority: 29.09.2007 CN 200710151799
(71) Applicant: TOPSEED TECHNOLOGY CORP., Chung Ho City, Taipei Hsien, Taiwan 235 (TW)
(72) Inventor: Chen, Jyh-Horng, Zhongzheng District Taipei city 100 (TW); Ho, Chien-Chang, Zhongzheng District Taipei city 100 (TW); Lin, Yuan-Pin, Zhongzheng District Taipei city 100 (TW)
(74) Representative: TER MEER - STEINMEISTER & PARTNER GbR

(57) **Abstract**

A method for positioning a cursor on a computer screen by a handheld camera shooting continuous images to detect movements of user's hand is disclosed. In a preferred embodiment, the camera is disposed in a handheld device such as laser pointer. The camera shoots a set of serial images of a locale scene and instantly sends to a computer. The computer selects particular feature spots within a first image and records their positions in the image. The computer then search the feature spots in a second image next to the first image. If one of the feature spots can be searched out, a movement of the handheld device can be obtained by calculating relatively positional change of the feature spot in between the two images. The computer can drive the cursor to move correspondingly. If no feature spots can be searched out, the computer abandons the selected feature spots and then selects new feature spots in the second image and search the new feature spots in a third image.

## Description

### BACKGROUND OF THE INVENTION

### 1. Field of the Invention

This invention relates to the cursor positioning of computer. In particular, the invention relates to a method for positioning a cursor by contrasting two images to detect movement of hand.

### 2. Related Art

Personal computers have completely adopted operating systems with the Graphical User Interface (GUI) for a long time. In the GUI, it mainly depends on shift of a cursor to execute a variety of operations. Usually, the shift of the cursor is controlled by a mouse.

Normal mice must be used on a fixed plane, usually a tabletop. However, the conventional mice may not be used in some certain cases. For example, in a case of computer presentation by software such as PowerPoint of Microsoft, a speaker normally operates the presentation software on a laptop computer to perform a slide show and holds a laser pointer to point at a slide content on a stage. For the speaker, it is hard to directly operate the computer which is performing the slide show. In most cases, the speaker requires an additional assistant to operate the computer. However, not only the speaker needs to communicate with the assistant for operating the presentation software throughout the whole presentation by means of hand signs, body gestures (such as nods) or speaking, but also, excepting the routine operations such as page skipping, it is hard for the speaker to command the assistant to perform those operations requiring clicking of cursor, e.g. clicking a hyperlink or selecting some certain words for highlighting in a slide.

Nowadays there are available products combining both laser point and control-by-shake mouse in the markets. In other words, a laser pointer held by the speaker also has a function of cursor positioning. These products with control-by-shake function do not require a fixed plane to be operated. However, because they use one or two accelerometers to sense movement of hand and the movement modes of each individual user's hands are absolutely different, the sensitivity of the accelerometer is very difficult to be set to suit requirements of different movement modes of all users. Furthermore, the accelerometer is to sense acceleration instead of speed, so that the mice with accelerometer can not accurately reflect the movement of hand. In particular, a handheld device (laser pointer) freely moves in space of three dimensions, so its tridimensional movement is difficult to be accurately converted into a shift of the cursor on a two dimensional plane (i.e., a display screen). That will lead to a result that an accurate control for the shift of the cursor might be labored. Therefore, those cursor positioning products adopting acceleration detecting technique are indeed difficult to accurately control the shift of the cursor. Overshifting, undershifting or inaccurate shifting direction of the cursor occurs frequently. Therefore, a further improvement is required.

### SUMMARY OF THE INVENTION

An object of the invention is to provide a cursor positioning method by a handheld camera, which allows a user to more accurately control shift of a cursor by a tridimensional movement of his/her hands. Without adopting conventional acceleration detecting approach, this invention can accurately convert a movement of hand into a shift of cursor by which the shift of cursor can be more accurately.

For achieving the object mentioned above, a camera of the invention is disposed in a handheld device such as laser pointer. The camera shoots a set of serial images of a locale scene and instantly sends to a computer. The computer selects particular feature spots from a first image and records their positions in the image. The computer then search the feature spots in a second image next to the first image. If one of the feature spots can be searched out, a movement of the handheld device can be obtained by calculating relatively positional change of the feature spot in the two images. The computer can drive the cursor to move correspondingly. If no feature spots can be searched out, the computer abandons the selected feature spots and then selects new feature spots in the second image and search the new feature spots in a third image. The steps will be repeated analogically until a feature spot which can be found in serial two images is searched out.

### BRIEF DESCRIPTION OF THE DRAWINGS

FIG. 1 is a perspective view of a handheld camera according to the present invention;
FIG. 2 is a systematically schematic diagram of a preferred embodiment according to the present invention;
FIG. 3 is a flow diagram illustrating a cursor positioning method according to the present invention;
FIG. 4 is an illustration showing a change of relative position of a feature spot selected from serial two images according to the present invention; and
FIG. 5 is an illustration showing a displacement of a cursor in a display screen.

### DETAILED DESCRIPTION OF THE INVENTION

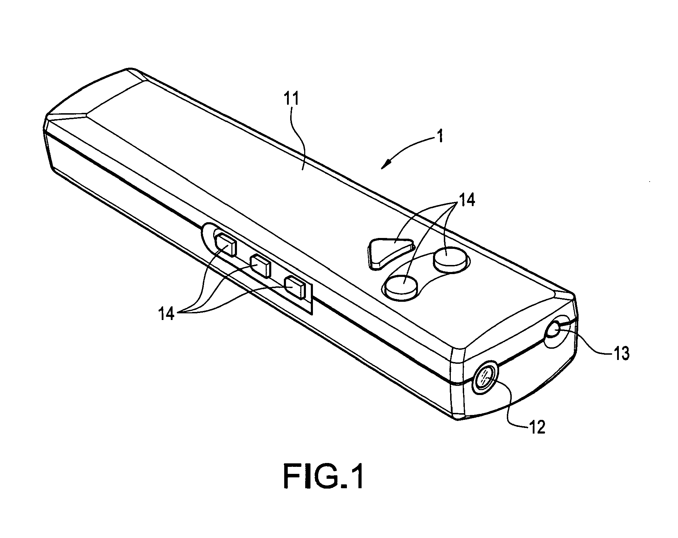

FIG. 1 is a perspective view of a handheld camera according to the present invention. The handheld camera 1 is a digital camera 12 disposed in a housing 11 which is suitable for handheld use. The housing 11 can preferredly be a longitudinal body. More preferredly, the digital camera 12 can associate with a laser pointer 13 to be disposed in the housing 11, and both a light emitting element of the laser pointer 13 and a lens of the digital camera 12 are located on the same side of the housing 11. Thereby, the handheld camera 1 also has a function of laser pointing. That will be more convenient to operate for a presentation speaker. However, a person skilled in the art must know that the digital camera 12 and laser pointer 13 are jointly disposed in the same housing 11, they still have independent and respective operation and control. There are a plurality of keys 14 on a surface of the housing 11 for operating by a user.

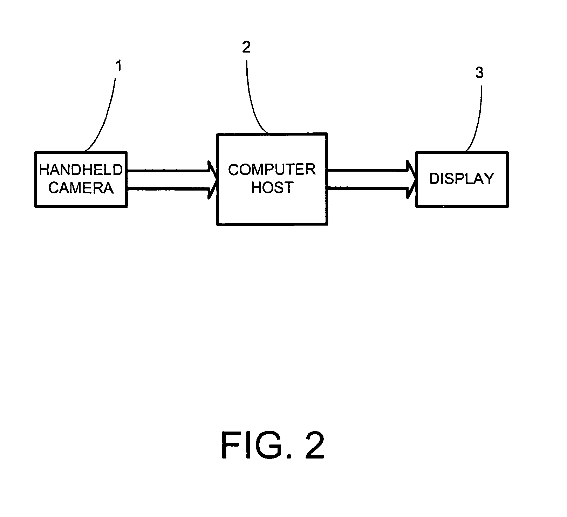

Referring to FIG. 2, the handheld camera 1 is electrically connected to a computer host 2 to serve as an input device thereof. The computer host 2 electrically connects with a display 3 serving as an output device. The handheld camera 1 and the computer host 2 can be coupled by either wireless or wired communicating connection. The wired connection can preferredly adopt, but not limited to, the USB (Universal Serial Bus) interface. The wireless connection can preferredly adopt, but not limited to, the Bluetooth interface. A person skilled in the art may alternatively select other available wired or wireless communication interfaces. By the communication interface, the handheld camera 1 sends digital image data shot by it to the computer host 2. The computer host 2 can obtain a relative movement of the handheld camera 1 by detecting those serial images to make a cursor on the display 3 generate a correspondingly relative displacement.

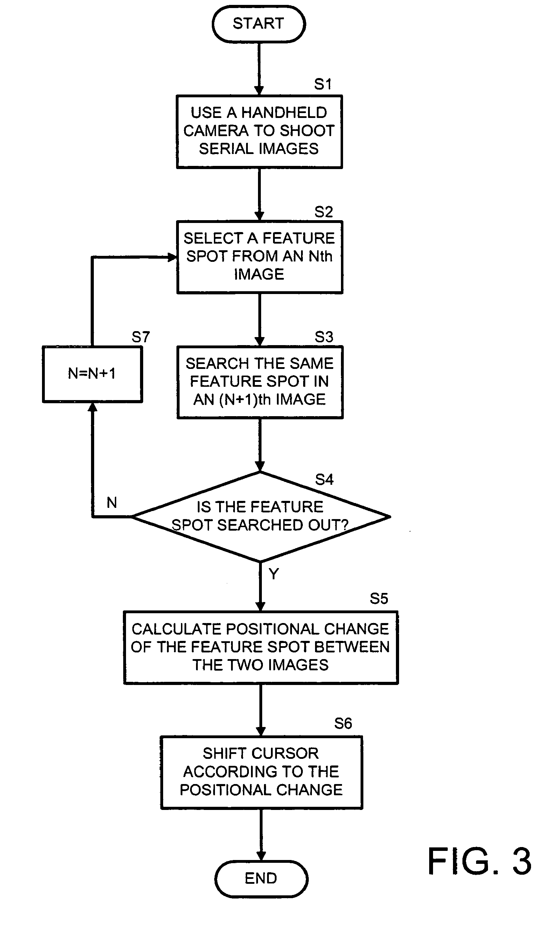

Referring to FIG. 3, a flow diagram illustrating a cursor positioning method of the present invention is shown. Beginning at step S1, a user holds the handheld camera 1 to shoot a set of serial images of a locale scene such as a venue for a presentation. The serial images are randomly photographed by the user without any limitations of direction or object. The contents of the images are also unlimited, for example people, desks, chairs, doors, windows, curtains, window shades, corners, pictures hung on a wall, bonsai and so on. The method continues with step S2 selecting one or more feature spots within a first still image of the serial images and recording patterns and positions of the selected feature spots. The feature spot can be a single pixel or a set of adjacent pixels having the highest contrast or brightness in the image. The method further includes searching S3 the same feature spots selected in step S2 in a second image next to the first image. When at least one the same feature spot appears in the second image S4Y, the method calculates a positional change of that feature spot in between the first and second images S5. The positional change represents a movement of the handheld camera 1 by which the feature spot moves in the two images. Finally, in step S6, the position of the cursor on the display 3 screen is shifted according to the positional change of the feature spot. The shift of the cursor includes elementary two factors: direction and distance. While in step S4N, when a user unduly jolts the handheld camera 1 or all the selected feature spots are not fixed objects so that all the feature spots selected in the first image can not be searched out in the second image, the method will perform step S7, which is discarding all the feature selected in the first image and alternatively selecting new feature spots from the second image served as a new reference image, and then searching the new feature spots in a third image next to the second image, i.e. repeating steps S2 to S4 until new feature spots can be searched out in serial two images. Then steps S5 and S7 can be performed to come close to step S4.

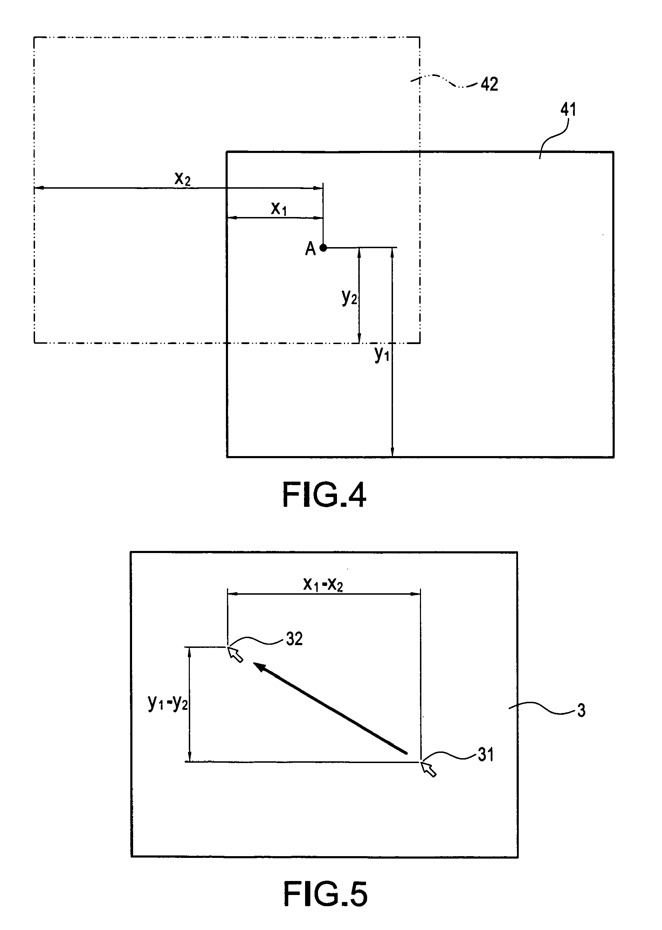

FIG. 4 is an illustration showing a change of relative position of a specific feature spot selected from serial two images. In FIG. 4, the two areas surrounded by a solid lined frame and a dotted lined frame are the first image 41 and the second image 42, respectively. Given both of the images 41, 42 are an x-y plane, respectively, point A is a specific feature spot from the first image 41. (*x1, y1*) are the rectangular coordinates of the point A in the first image 41. Because of the movement of the handheld camera 1, the rectangular coordinates of the point A in the second image 42 become (*x2, y2*). Thus, the shifting quantity of the point A will be ((*x1-x2*), (*y1-y2*)). In the coordinates shown in FIG. 4, a negative value of (*x1-x2*) represents a leftward movement of the handheld camera 1 (as shown in the figure), positive represents rightward; a positive value of (*y1-y2*) represents an upward movement (as shown in the figure), and negative represents downward. A condition as shown in FIG. 4 represents a left upward movement of the handheld camera 1.

After the shifting quantity of the handheld camera 1 is obtained, the cursor on the display 3 screen can generate a corresponding displacement. As shown in FIG. 5, the cursor 31 is at an original position, i.e. a position at the time point that the first image 41 in FIG. 4 occurs. Because a left upward movement with a distance of ((*x1-x2*), (*y1-y2*)) of the handheld camera 1 is detected, the cursor 31 correspondingly shifts to the position 32. For the sake of the best understanding, FIG. 5 adopts a corresponding relationship with the ratio 1:1 of the shot images 41, 42 to the display 3 screen. However, the shifting quantity of the cursor on the display 3 may alternatively adopt other ratios. In other words, the shifting quantity of the cursor on the display 3 screen can be (*a*(*x1-x2*), *a*(*y1-y2*)), where a is a coefficient of proportion being any numeral value greater than zero, and can be modified according to the distance between the handheld camera 1 and a main scene or background as well as the personal practice of a user's hand moving.

As mentioned above, the present invention detects a user's hand moving by means of photographing fixed objects by a free camera to control the displacement of the cursor. The drawback of inaccurate orientation resulting from conventional acceleration detecting technique can be completely avoided. The present invention uses the shift of a feature spot on a two-dimensional image as a basis for cursor shifting on a two-dimensional screen to make cursor positioning more accurate and precise.

## Claims

1. A method for positioning a cursor, comprising:
a) using a handheld camera (1) to shoot serial images;
b) selecting at least one feature spot from an Nth image of the serial images;
c) searching the same feature spot selected in the step b from an (N+1)th image next to the Nth image;
d) calculating a positional change of the searched feature spot in between the Nth and (N+1)th images when the same feature spot is searched out in the (N+1)th image;
e) shifting a cursor on a display (3) screen according to the positional change of the feature spot;
f) alternatively selecting other feature spot from the (N+1)th image when no feature spots can be searched out in the step c; and
g) repeating the steps c-f by N=N+1 after the step f.

2. The method of claim 1, wherein an amount of the feature spot selected in the step b or f is one.

3. The method of claim 1, wherein an amount of the feature spot selected in the step b or f is two or more.

4. The method of claim 1, wherein the feature spot is an area having the highest contrast or brightness in the image.

5. The method of claim 1, wherein the handheld camera is a digital camera (12) disposed in a longitudinal housing (11).
